# EUROPÄISCHE PATENTANMELDUNG

(11) **EP 2 907 762 A1**
(43) Veröffentlichungstag der Anmeldung: **19.08.2015**
(21) Anmeldenummer: 14155220.8
(22) Anmeldetag: 14.02.2014
(51) Int. Cl.: B65B 59/04, B29C 31/00, B30B 15/02, B62B 3/00

(54) **Werkzeugwechselwagen für Verpackungsmaschinen**

(71) Anmelder: Multivac Sepp Haggenmüller GmbH & Co. KG, 87787 Wolfertschwenden (DE)
(72) Erfinder: Kelly, David, 87448 Memhölz (DE); Negele, Wolfgang, 87724 Ottobeuren (DE)
(74) Vertreter: Grünecker Patent- und Rechtsanwälte PartG mbB

(57) **Zusammenfassung**

Die Erfindung betrifft einen Werkzeugwechselwagen (1) mit einer Aufnahmeeinrichtung (7), um einen Werkzeugwechsel von einer ersten Verpackungsmaschine (18) auf eine zweite Verpackungsmaschine (19) durchführen zu können. Dabei wird das Werkzeug (2, 3, 4) von der ersten Verpackungsmaschine (18) an einer ersten Aufnahmeseite (14a) auf den Werkzeugwechselwagen (1) übernommen und an der gegenüber der ersten Aufnahmeseite (14a) gelegenen zweiten Aufnahmeseite (14b) der Aufnahmeeinrichtung (7) an die zweite Verpackungsmaschine (19) in der Wechselrichtung (W) übergeben.

## Beschreibung

Die Erfindung bezieht sich auf ein Verfahren zum Wechseln eines Siegel- oder Formwerkzeugs an einer Verpackungsmaschine gemäß dem Oberbegriff des Anspruchs 1 bzw. auf einen Werkzeugwechselwagen mit den Merkmalen des Anspruchs 4.

Es ist aus der EP 1 340 667 B1 ein Werkzeugwechselwagen bekannt, um ein Siegelwerkzeugoberteil und/oder ein Siegelwerkzeugunterteil von einer Schalenverschließmaschine aufzunehmen. Dabei ist wenigstens ein Rad am Fahrgestell höhenverstellbar, um die Neigung des Werkzeugwechselwagens zur Schalenverschließmaschine auf einem unebenen Boden ausgleichen zu können. Die DE 20 2006 010 803 U1 zeigt einen solchen Werkzeugwechselwagen zusätzlich mit einem Anschlagelement zum Andocken an eine Verpackungsmaschine.

Die WO 2012/152443 A2 offenbart einen Werkzeugwechselwagen für Verpackungsmaschinen, um Form- oder Siegelwerkzeuge wechseln zu können. Der Werkzeugwechselwagen weist Mittel zum reversiblen Andocken an die Verpackungsmaschine auf. Eine obere Aufnahme beispielsweise für ein Siegelwerkzeugoberteil ist schwenkbar ausgeführt.

Die WO 2013/140187 A1 offenbart einen Werkzeugwechselwagen mit einem in Draufsicht C-förmigen Gestell zur gemeinsam Aufnahme eines Siegelwerkzeugoberteils und Siegelwerkzeugunterteils als Werkzeugpaket von einer Schalenverschließmaschine. Eine obere Aufnahme kann das Siegelwerkzeugoberteil aufnehmen, während eine untere Aufnahme höhenverstellbar ist. Das Siegelwerkzeugunterteil kann nach der Aufnahme am Boden abgesetzt werden, während das Siegelwerkzeugoberteil in der oberen Aufnahme beispielsweise für eine Wartung schwenkbar ist.

Die DE 10 2011 112 658 A1 zeigt einen Werkzeugwechselwagen mit einer Andockvorrichtung an eine Verpackungsmaschine, um temporär ein Trennen von Verpackungsmaschine und Werkzeugwechselwagen zu verhindern, während sich das Werkzeugpaket zwischen der Verpackungsmaschine und dem Werkzeugwechselwagen befindet. Die Andockvorrichtung sorgt gleichzeitig dafür, dass das aufgenommene Werkzeugpaket von auf dem Werkzeugwechselwagen gesichert bleibt, nachdem der Werkzeugwechselwagen von der Verpackungsmaschine getrennt wurde.

Nachteilig an den bekannten Werkzeugwechselwagen für Verpackungsmaschinen ist, dass beispielsweise bei zwei an einem gemeinsamen Gang aufgestellten und von dort zu bedienenden Verpackungsmaschinen, die soweit identisch sind, dass ein gegenseitiger Austausch von Werkzeugen möglich und vorgesehen ist, ein einfacher Wechsel bzw. eine Übergabe von einer auf eine andere Verpackungsmaschine nicht möglich ist. Bei Einsatz der bekannten Werkzeugwagen werden die Werkzeuge aus der ersten Maschine entnommen. Anschließend muss der Werkzeugwagen an einen Wechselplatz fahren, um die Werkzeuge abzulegen und in entgegengesetzter Ausrichtung wieder aufzunehmen. Dann erst fährt der Werkzeugwechselwagen wieder zurück zwischen die zwei Verpackungsmaschinen und übergibt die Werkzeuge in die zweite Maschine. Dieser Ablauf ist aufwändig und zeitintensiv.

Aufgabe der vorliegenden Erfindung ist es, ein Verfahren und einen Werkzeugwechselwagen für Verpackungsmaschinen bereitzustellen, um einen Werkzeugwechsel von Siegel- oder Formwerkzeugen zwischen zwei an einem gemeinsamen Gang aufgestellten und von dort zu bedienenden Verpackungsmaschinen zu verbessern.

Diese Aufgabe wird gelöst durch ein Verfahren zum Wechseln eines Siegel- oder Formwerkzeugs mit den Merkmalen des Anspruchs 1 bzw. durch einen Werkzeugwechselwagen mit den Merkmalen des Anspruchs 4. Vorteilhafte Weiterbildungen der Erfindung sind in den Unteransprüchen angegeben.

Das erfindungsgemäße Verfahren zum Wechseln eines Siegel- oder Formwerkzeugs von einer ersten Verpackungsmaschine auf eine zweite Verpackungsmaschine mittels eines Werkzeugwechselwagens, der eine Aufnahmeeinrichtung umfasst, die eine erste Aufnahmeseite und eine zweite Aufnahmeseite aufweist, wobei die erste Aufnahmeseite und die zweite Aufnahmeseite an zwei gegenüberliegenden Seiten der Aufnahmeeinrichtung vorgesehen sind, weist folgende Schritte auf:
- Andocken des Werkzeugwechselwagens mit der ersten Aufnahmeseite der Aufnahmeeinrichtung seitlich an der ersten Verpackungsmaschine,
- Übernehmen des Werkzeugs von der ersten Verpackungsmaschine auf die Aufnahmeeinrichtung des Werkzeugwechselwagens,
- Lösen des Werkzeugwechselwagens von der ersten Verpackungsmaschine,
- Andocken des Werkzeugwechselwagens mit der zweiten Aufnahmeseite der Aufnahmeeinrichtung seitlich an der zweiten Verpackungsmaschine,
- Übergeben des Werkzeugs von der Aufnahmeeinrichtung an die zweite Verpackungsmaschine.

Dies ermöglicht einen direkten Wechsel eines Werkzeuges oder eines Werkzeugpakets, das beispielsweise aus einem Werkzeugober- und einem Werkzeugunterteil besteht, zwischen zwei Verpackungsmaschinen, vorzugsweise Tiefziehverpackungsmaschinen oder Schalenverschließmaschinen. Es ermöglicht auch ein Übernehmen eines Werkzeugs aus einer ersten Maschine und ein Ablegen in ein Regal oder auf eine Werkbank über die erste Aufnahmeseite, um es beispielsweise nach einer Wartung oder Reinigung über die zweite Aufnahmeseite im Werkzeugwechselwagen aufzunehmen und anschließend in die zweite Verpackungsmaschine zu übergeben. So kann die Orientierung des Werkzeugs entsprechend der Produktionsrichtung der Verpackungsmaschine angepasst werden, ohne dass eine Drehung des Werkzeugs durch das Bedienpersonal durchzuführen ist. Dabei kann eine Hebevorrichtung für schwere Werkzeuge vorteilhaft sein.

Vorzugsweise wird die Aufnahmeeinrichtung mittels einer Neigungseinstelleinrichtung des Werkzeugwechselwagens passend zur Verpackungsmaschine vor dem Andocken eingestellt. Dies erleichtert das Andocken und Wechseln der Werkzeuge, da somit ein geneigter Boden zumindest in einer Richtung ausgeglichen werden kann und die Aufnahmeeinrichtung horizontal bzw. planparallel zum Werkzeug bzw. zur Verpackungsmaschine eingestellt werden kann.

Das Werkzeug wird in einer besonders vorteilhaften Ausführung nach dem Lösen des Werkzeugwechselwagens von der Verpackungsmaschine mittels Andockvorrichtungen an beiden Aufnahmeseiten der Aufnahmeeinrichtung gesichert.

Ein erfindungsgemäßer Werkzeugwechselwagen umfasst eine Aufnahmeeinrichtung für ein Siegel- oder Formwerkzeug einer Verpackungsmaschine, wobei das Siegel- oder Formwerkzeug ein Ober- und/oder ein Unterteil umfasst, wobei die Aufnahmeeinrichtung höhenverstellbar ausgeführt ist. Der Werkzeugwechselwagen zeichnet sich dadurch aus, dass die Aufnahmeeinrichtung eine erste Aufnahmeseite und eine zweite Aufnahmeseite aufweist, wobei die erste Aufnahmeseite und die zweite Aufnahmeseite an zwei gegenüberliegenden Seiten der Aufnahmeeinrichtung vorgesehen sind. Dies ermöglicht ein flexibles Wechseln von Werkzeugen auf bzw. von zwei gegenüberliegenden Seiten des Werkzeugwechselwagens.

Bevorzugt weist die Aufnahmeeinrichtung an beiden Aufnahmeseiten Andock- und Sicherungsvorrichtungen auf. Dabei sind die Andock- und Sicherungsvorrichtungen vorzugsweise auch dazu konfiguriert, ein Werkzeug auf der Aufnahmeeinrichtung zu sichern. So kann der Werkzeugwechselwagen beidseitig an Verpackungsmaschinen andocken und das Werkzeug auf dem Werkzeugwechselwagen ist gegen ein Herunterrutschen oder ein Herunterfallen gesichert. Die Andock- und Sicherungsvorrichtungen sind bevorzugt so gestaltet wie in der DE 10 2011 112 658 A1 beschrieben, auf die in dieser Hinsicht ausdrücklich verwiesen wird.

Vorzugsweise ist eine Neigungseinstelleinrichtung für die Aufnahmeeinrichtung vorgesehen, um die Aufnahmeeinrichtung vor dem Andocken an die Verpackungsmaschine und beispielsweise vor dem Übernehmen des Werkzeugs horizontal bzw. planparallel zum Werkzeug bzw. zur Verpackungsmaschine auszurichten.

In einer besonders vorteilhaften Ausführung ist eine Schwenkvorrichtung für ein Werkzeugoberteil oder ein Werkzeugunterteil eines Siegel- oder Formwerkzeugs vorgesehen. Dabei weist die Schwenkvorrichtung vorzugsweise eine Schwenkachse quer zu einer Wechselrichtung auf. So kann ein Siegelwerkzeugoberteil oder ein Formwerkzeugoberteil mit seiner Unterseite beispielsweise um 90° oder 180° geschwenkt werden, um ein ergonomisches Reinigen oder Warten zu ermöglichen.

Die Aufnahmeeinrichtung weist bevorzugt eine Verriegelungsvorrichtung für das Werkzeug auf, um das Werkzeug in einer eindeutigen Aufnahmeposition auf der Aufnahmeeinrichtung auch gegen Verrutschen während einer Bewegung des Werkzeugwechselwagens zu fixieren.

Dabei weist die Verriegelungsvorrichtung bevorzugt jeweils eine Löseeinrichtung an der ersten und an der zweiten Aufnahmeseite auf, um eine beidseitige Bedienung zu ermöglichen.

Im Folgenden wird ein vorteilhaftes Ausführungsbeispiel der Erfindung anhand von Zeichnungen näher erläutert. Im Einzelnen zeigen:
- Fig. 1: einen erfindungsgemäßen Werkzeugwechselwagen mit einem Werkzeugober- und unterteil,
- Fig. 2: den Werkzeugwechselwagen mit separierten Werkzeugen,
- Fig. 3: den Werkzeugwechselwagen mit geschwenktem Werkzeugoberteil,
- Fig. 4: einen Werkzeugwechselwagen und zwei Verpackungsmaschinen vor einer Werkzeugübernahme von der ersten Verpackungsmaschine,
- Fig. 5: den Werkzeugwechselwagen mit aufgenommen Werkzeugen, und
- Fig. 6: den Werkzeugwechselwagen nach einer Werkzeugübergabe an die zweite Verpackungsmaschine.

Gleiche Komponenten sind in den Figuren durchgängig mit gleichen Bezugszeichen versehen.

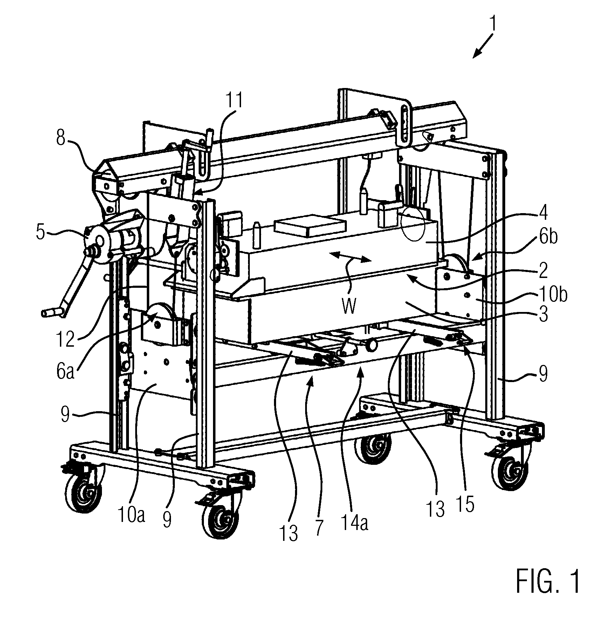

Fig. 1 zeigt einen erfindungsgemäßen Werkzeugwechselwagen 1 mit einem Werkzeugpaket 2, das ein Werkzeugunterteil 3, beispielsweise ein Siegel- oder Formwerkzeugunterteil, und ein Werkzeugoberteil 4, beispielsweise ein Siegel- oder Formwerkzeugoberteil, umfasst. Über einen manuellen Antrieb 5 und einen ersten Flaschenzug 6a und einen zweiten Flaschenzug 6b wird eine Aufnahmeeinrichtung 7 angehoben oder abgesenkt. Beide Flaschenzüge 6a, 6b sind über eine Synchronisierungswelle 8 miteinander verbunden und werden gemeinsam mittels des Antriebs 5 angetrieben.

Der Werkzeugwechselwagen 1 weist an zwei gegenüberliegenden Seiten jeweils zwei Führungssäulen 9 auf. Zwischen jeweils zwei Führungssäulen 9 an jeweils einer Seite ist ein Schlitten 10a, 10b geführt. Die Aufnahmeeinrichtung 7 ist zwischen beiden Schlitten 10a, 10b angeordnet. Um die Aufnahmeeinrichtung 7 zwischen den Seiten, die durch die Schlitten 10a, 10b definiert sind, neigen zu können, ist eine Neigungseinstelleinrichtung 11 an dem Flaschenzug 6a vorgesehen. Die Neigungseinstelleinrichtung 11 ist dazu konfiguriert, das gegenüber dem Antrieb 5 entfernte Ende des Seils 12 des Flaschenzugs 6a anheben oder absenken zu können. Dies führt zu einer Relativbewegung des einen Schlittens 10a zum anderen Schlitten 10b und somit zu einer Kippbewegung der Aufnahmeeinrichtung 7 in Längsrichtung des dargestellten Werkzeugwechselwagens 1, d.h. quer zur nachfolgend beschriebenen Wechselrichtung W. So kann die Neigung der Aufnahmeeinrichtung 7 gegenüber dem Boden eingestellt werden.

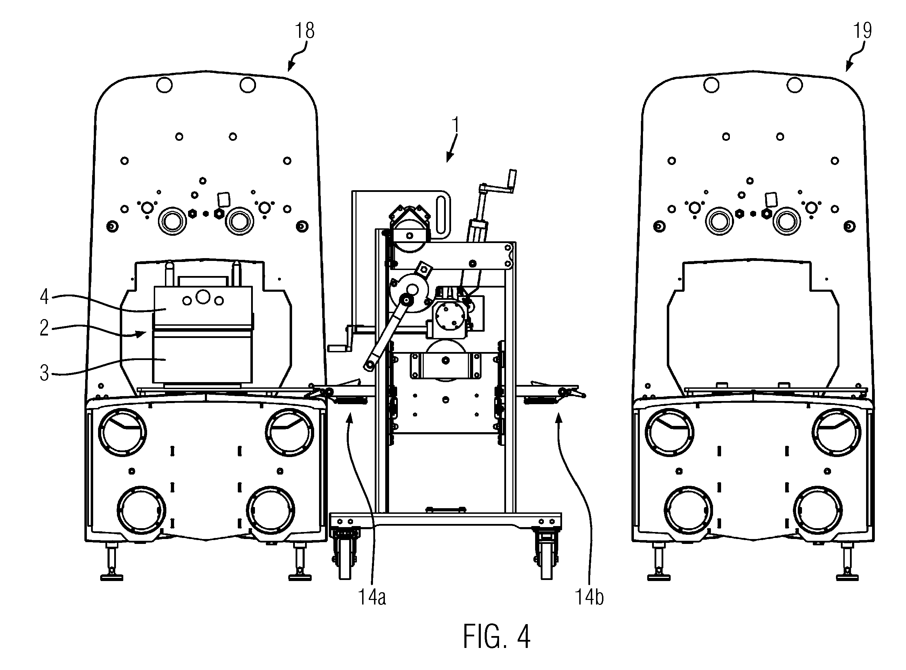

Die Aufnahmeeinrichtung 7 weist zwei Auflagen 13 auf, die in einer Wechselrichtung W ausgerichtet sind. Die Aufnahmeeinrichtung 7 hat eine erste Aufnahmeseite 14a, die sich relativ zu der Zeichenebene vor dem Werkzeugpaket 2 befindet. Eine zweite Aufnahmeseite 14b liegt hinter dem Werkzeugpaket 2 und ist in Fig. 4 gezeigt. Die beiden Auflagen 13 sind parallel zueinander und erstrecken sich jeweils von der ersten Aufnahmeseite 14a zur zweiten Aufnahmeseite 14b. Beide Aufnahmeseiten 14a, 14b sind dazu konfiguriert, an einer Verpackungsmaschine 18, 19 (siehe Figuren 4 bis 6) anzudocken und ein Werkzeug 2, 3, 4 zwischen der Verpackungsmaschine 18, 19 und dem Werkzeugwechselwagen 1 hin und her zu bewegen. An jeweils beiden Enden der Auflagen 13 sind Andockund Verriegelungseinrichtungen 15 vorgesehen, um sich mit der Verpackungsmaschine 18, 19 zu verbinden und nach dem Lösen das Werkzeug 2, 3, 4 auf der Aufnahmeeinrichtung 7 zu sichern. Die Andock- und Verriegelungseinrichtung 15 ist eine Einrichtung, die als Kombination zum Andocken an die Verpackungsmaschine 18, 19 und zum Sichern von Werkzeugen 2, 3, 4 konfiguriert ist.

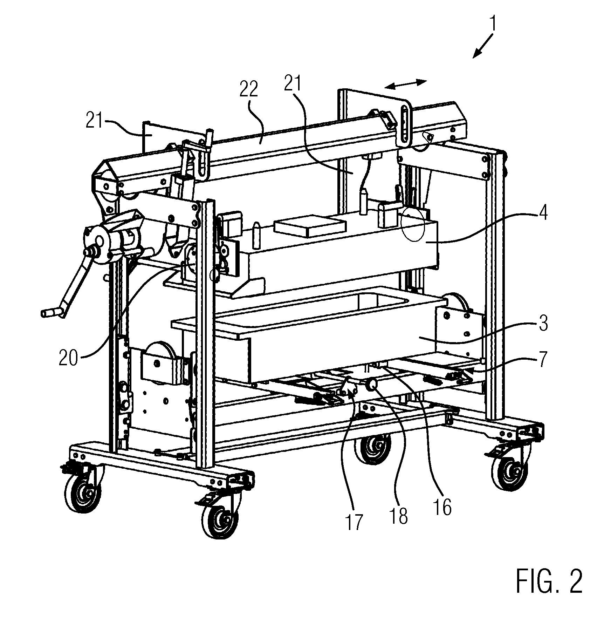

Fig. 2 zeigt den Werkzeugwechselwagen 1 mit einer abgesenkten Aufnahmeeinrichtung 7. Vor dem Absenken des Werkzeugunterteils 3 ist das Werkzeugoberteil 4 in einer beidseitig vorgesehen Schwenkvorrichtung 20 übernommen worden. Die Schwenkvorrichtung 20 ist mittels zwei Haltern 21 an einer oberen Traverse 22 angebracht. Die Halter 21 sind entlang der oberen Traverse 22 flexibel anbringbar vorgesehen, um die Schwenkvorrichtung 20 auf verschiedene Werkzeuglängen anpassen zu können.

Die Aufnahmeeinrichtung 7 weist eine Verriegelungsvorrichtung 16 auf, um das Werkzeugunterteil 3 auf der Aufnahmeeinrichtung 7 zu fixieren. Um das Werkzeugunterteil 3 vor einer Übergabe an die Verpackungsmaschine 18, 19 lösen zu können, ist an der ersten und zweiten Aufnahmeseite 14a, 14b je eine Löseeinrichtung 17 vorgesehen. Durch Ziehen an einem Griff 18 an der Löseeinrichtung 17 wird das Werkzeugunterteil 3 über die Verriegelungseinrichtung 16 entriegelt und zum Verschieben freigegeben. In dieser gezeigten unteren Position ist das Werkzeugunterteil 3 für eine Reinigung oder eine Wartung gut zugänglich.

Denkbar ist auch, dass lediglich ein Werkzeugunterteil 3 auf die Aufnahmeeinrichtung 7 aufgenommen wird und anschließend das Werkzeugunterteil 3 über die höhenverstellbare Aufnahmeeinrichtung 7 nach oben bewegt und von der Schwenkvorrichtung 20 aufgenommen wird. So kann beispielsweise zum Reinigen des Werkzeugunterteils 3 das Werkzeugunterteil 3 mittels der Schwenkvorrichtung 20 geneigt werden.

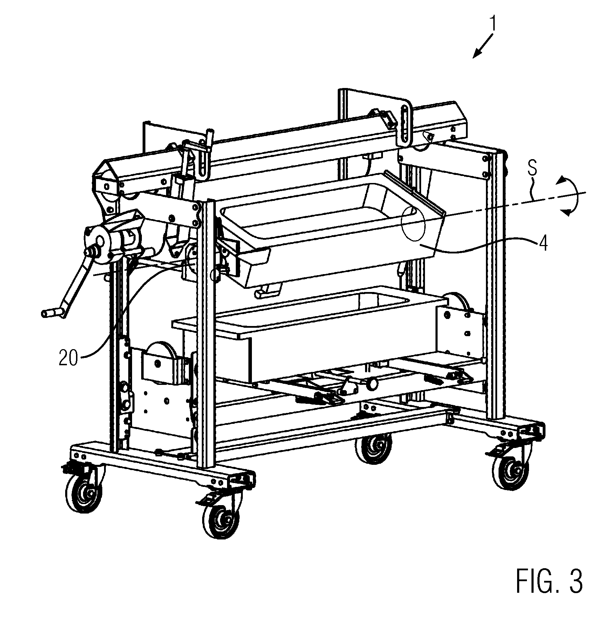

Fig. 3 zeigt das Werkzeugoberteil 4 in einer um eine Schwenkachse S der Schwenkvorrichtung 20 geneigten Stellung, um auch das Werkzeugoberteil 4 für eine Reinigung oder eine Wartung gut zugänglich zu machen. Das Schwenken kann manuell über den Bediener erfolgen und es ist eine nicht näher dargestellte Arretierung oder Klemmeinrichtung an der Schwenkvorrichtung 20 vorgesehen.

Fig. 4 zeigt eine erste Verpackungsmaschine 18 auf der linken Seite der Darstellung und ein zweite Verpackungsmaschine 19 auf der rechten Seite. Beide Verpackungsmaschinen 18, 19 sind in Form von Schalenverschließmaschinen und als Schnittdarstellung dargestellt, um die Bewegungen des Werkzeugpakets 2 in Form eines Siegelwerkzeugunterteils 3 und eines Siegelwerkzeugoberteils 4 zwischen den Verpackungsmaschinen 18, 19 besser zeigen zu können. Der Werkzeugwechselwagen 1 ist zwischen beiden Verpackungsmaschinen 18, 19 vorgesehen und in einer Position gezeigt, bei der er mit seiner zweiten Aufnahmeseite 14b an der ersten Verpackungsmaschine 18 angedockt ist, um das Werkzeugpaket 2 zu übernehmen. Die zweite Verpackungsmaschine 19 weist kein Werkzeugpaket 2 auf.

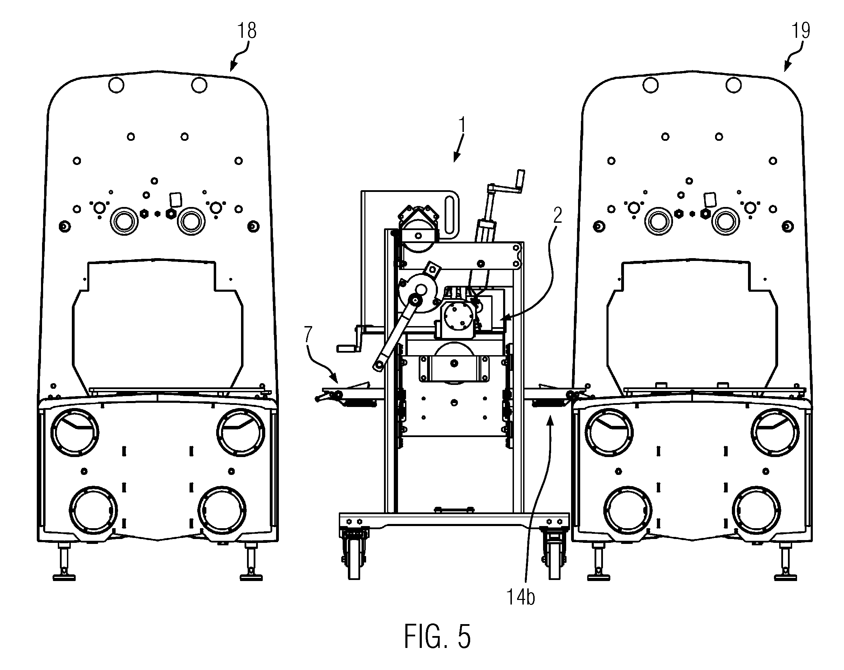

In Fig. 5 hat der Werkzeugwechselwagen 1 das Werkzeugpaket 2 auf seine Aufnahmeeinrichtung 7 übernommen und sich anschließend von der ersten Verpackungsmaschine 18 gelöst und ist nun in einer mit seiner ersten Aufnahmeseite 14a an die zweite Verpackungsmaschine 19 angedockten Stellung gezeigt, um so das Werkzeugpaket 2 an die zweite Verpackungsmaschine 19 zu übergeben.

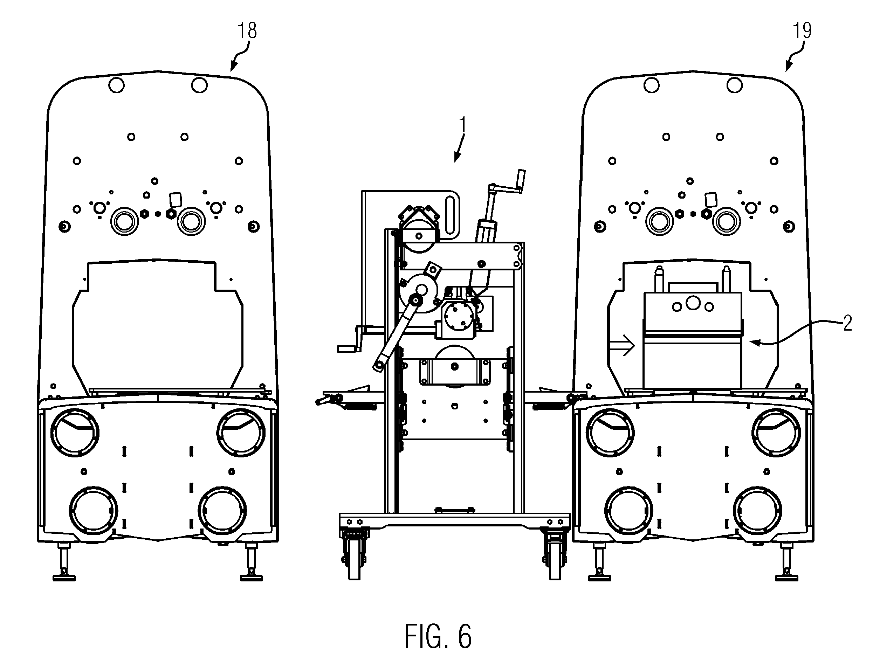

Fig. 6 zeigt die zweite Verpackungsmaschine 19 mit dem Werkzeugpaket 2. Das Werkzeugpaket 2 hat seine Orientierung bei der Übergabe von der ersten Verpackungsmaschine 18 auf die zweite Verpackungsmaschine 19 beibehalten. Dies ist auch notwendig, wenn beide Verpackungsmaschinen 18, 19, wie in den Figuren 4 bis 6 gezeigt, in einer gemeinsamen (gleichen) Produktionsrichtung nebeneinander und nur durch einen Zwischengang für das Befahren mit dem Werkzeugwechselwagen 1 getrennt angeordnet sind. Die zwei Verpackungsmaschinen 18, 19 sind in einer sogenannten "spiegelbildlichen" Ausführung aufgestellt, da die Bedienseiten beider Verpackungsmaschinen 18, 19 zum Zwischengang weisen.

Anstelle des Werkzeugpakets 2 könnte auch lediglich ein Werkzeugunterteil 3 oder ein Werkzeugoberteil 4 einer Form- oder Siegelstation der Verpackungsmaschine 18, 19 gewechselt werden.

## Patentansprüche

1. Verfahren zum Wechseln eines Siegel- oder Formwerkzeugs (2, 3, 4) von einer ersten Verpackungsmaschine (18) auf eine zweite Verpackungsmaschine (19) mittels eines Werkzeugwechselwagens (1), der eine Aufnahmeeinrichtung (7) umfasst, die eine erste Aufnahmeseite (14a) und eine zweite Aufnahmeseite (14b) aufweist, wobei die erste Aufnahmeseite (14a) und die zweite Aufnahmeseite (14b) an zwei gegenüberliegenden Seiten der Aufnahmeeinrichtung (7) vorgesehen sind, wobei das Verfahren folgende Schritte aufweist:
- Andocken des Werkzeugwechselwagens (1) mit der ersten Aufnahmeseite (14a) der Aufnahmeeinrichtung (7) seitlich an der ersten Verpackungsmaschine (18),
- Übernehmen des Werkzeugs (2, 3, 4) von der ersten Verpackungsmaschine (18) auf die Aufnahmeeinrichtung (7) des Werkzeugwechselwagens (1),
- Lösen des Werkzeugwechselwagens (1) von der ersten Verpackungsmaschine (18),
- Andocken des Werkzeugwechselwagens (1) mit der zweiten Aufnahmeseite (14b) der Aufnahmeeinrichtung (7) seitlich an der zweiten Verpackungsmaschine (19),
- Übergeben des Werkzeugs (2, 3, 4) von der Aufnahmeeinrichtung (7) an die zweite Verpackungsmaschine (19).

2. Verfahren nach Anspruch 1, **dadurch gekennzeichnet, dass** die Aufnahmeeinrichtung (7) mittels einer Neigungseinstelleinrichtung (11) des Werkzeugwechselwagens (1) passend zur Verpackungsmaschine (18, 19) vor dem Andocken eingestellt wird.

3. Verfahren nach einem der vorangehenden Ansprüche, **dadurch gekennzeichnet, dass** das Werkzeug (2, 3, 4) nach dem Lösen des Werkzeugwechselwagens (1) von der Verpackungsmaschine (18, 19) mittels Andock- und Sicherungsvorrichtungen (15) an beiden Aufnahmeseiten (14a, 14b) der Aufnahmeeinrichtung (7) gesichert wird.

4. Werkzeugwechselwagen (1), umfassend eine Aufnahmeeinrichtung (7) für ein Siegel- oder Formwerkzeug (2, 3, 4) einer Verpackungsmaschine (18, 19), wobei das Siegel- oder Formwerkzeug (2, 3, 4) ein Ober- und/oder ein Unterteil (3, 4) umfasst, wobei die Aufnahmeeinrichtung (7) höhenverstellbar ausgeführt ist, **dadurch gekennzeichnet, dass** die Aufnahmeeinrichtung (7) eine erste Aufnahmeseite (14a) und eine zweite Aufnahmeseite (14b) aufweist, wobei die erste Aufnahmeseite (14a) und die zweite Aufnahmeseite (14b) an zwei gegenüberliegenden Seiten der Aufnahmeeinrichtung (7) vorgesehen sind.

5. Werkzeugwechselwagen nach Anspruch 4, **dadurch gekennzeichnet, dass** die Aufnahmeeinrichtung (7) an beiden Aufnahmeseiten (14a, 14b) Andock- und Sicherungsvorrichtungen (15) aufweist.

6. Werkzeugwechselwagen nach Anspruch 5, **dadurch gekennzeichnet, dass** die Andock- und Sicherungsvorrichtungen (15) dazu konfiguriert sind, ein Werkzeug (2, 3, 4) auf der Aufnahmeeinrichtung (7) zu sichern.

7. Werkzeugwechselwagen nach einem der Ansprüche 4 bis 6, **dadurch gekennzeichnet, dass** eine Neigungseinstelleinrichtung (11) für die Aufnahmeeinrichtung (7) vorgesehen ist.

8. Werkzeugwechselwagen nach einem der Ansprüche 4 bis 7, **dadurch gekennzeichnet, dass** eine Schwenkvorrichtung (20) für ein Werkzeugoberteil (4) oder ein Werkzeugunterteil (3) eines Siegel- oder Formwerkzeugs vorgesehen ist.

9. Werkzeugwechselwagen nach Anspruch 8, **dadurch gekennzeichnet, dass** die Schwenkvorrichtung (20) eine Schwenkachse (S) quer zu einer Wechselrichtung (W) aufweist.

10. Werkzeugwechselwagen nach einem der Ansprüche 4 bis 9, **dadurch gekennzeichnet, dass** die Aufnahmeeinrichtung (7) eine Verriegelungsvorrichtung (16) für das Werkzeug (2, 3, 4) aufweist.

11. Werkzeugwechselwagen nach Anspruch 10, **dadurch gekennzeichnet, dass** die Verriegelungsvorrichtung (16) jeweils eine Löseeinrichtung (17) an der ersten und an der zweiten Aufnahmeseite (14a, 14b) aufweist.
